# EUROPEAN PATENT APPLICATION

(11) **EP 2 725 552 A1**
(43) Date of publication of application: **30.04.2014**
(21) Application number: 12190467.6
(22) Date of filing: 29.10.2012
(51) Int. Cl.: G06T 7/20, G08B 13/196, H04N 7/18, G06K 9/00

(54) **System and method for selecting sensors in surveillance applications**

(71) Applicant: ATS Group (IP Holdings) Limited, Road Town, Tortola (VG)
(72) Inventor: Frangiadakis, Nikolaos, 64295 Darmstadt (DE); Heremans, Roel, 64295 Darmstadt (DE); Hamer, Henning, 64295 Darmstadt (DE)
(74) Representative: Börner, Robert

(57) **Abstract**

A computer implemented method for selecting at least one sensor from a plurality of sensors (130,132,134), wherein the at least one sensor is adapted to record sensor-data that is related to a geographical area (110,112), wherein the sensor-data comprises information about objects (537) movable between locations (A,B,C,D,E,F) of that geographical area (110,112), wherein a data structure (120,121,122,123) with a pre-processed graph represents the geographical area (110,112), the pre-processed graph having elements comprising nodes and edges, wherein nodes (a,b,c,d,e,f) represent the locations (A,B,C,D,E,F) of the geographical area (110,112), wherein edges represent transition times (140) for the objects (537) if moving between the locations (A,B,C,D,E,F), and wherein the pre-processed graph has a simplified number of nodes (a,b,c,d,e,f) according to rules applied to the elements, the method comprising: receiving an event (135) indicator in relation to a particular location (B); identifying a particular node (145,b) that represents that particular location (B); identifying further nodes (a,c,e) for which accumulated transition times from the particular node (b) have values in a predefined relation to a time interval (Ttrace) from the event (135); and selecting at least one sensor (130') from the plurality of sensors (130,132,134) that is related to the locations represented by the identified nodes (a,b,c,e).

## Description

### Technical Field

The present invention generally relates to electronic data processing and in particular to systems and methods for processing data in surveillance applications.

### Background

Geographical areas are often monitored by sensors. A classic scenario refers to monitoring urban areas. In such areas, roads or other public facilities are frequented by vehicles, bikes, pedestrians and other entities, hereafter collectively referred to as "object/s". These objects can move between locations inside the area and thereby create dense and busy traffic.

Of particular interest for security authorities (e.g., police, medical services) are incidents involving objects that escape from a scene/location. For example, a pedestrian could be injured by a car, but the car driver might continue driving (due to unawareness or criminal intent). The police needs to identify not only the car, but also the potential escape region it takes. For the police, knowledge of the potential escape region is helpful to identify the object. But to take appropriate actions, for example, to intercept the object, the allowable time is limited. Therefore, finding this object is often time critical. For example, if the object moves further away from the incident and unique data, such as the information on the license plate, is not available, it might become intractable to identify the object at all. For example, there might be too many similar looking objects in the area.

In the mentioned areas, surveillance sensors that can identify persons or objects have become ubiquitously available. Sensors can be, for example, optical sensors (e.g., video cameras, infrared cameras), electromagnetic wave sensors (e.g., radars), seismic wave sensors (e.g., seismometer), acoustic sensors, chemical sensors, etc. The sensors can provide a huge amount of sensor-data which has to be processed in a time window which allows retrieving the object's location. The sensor-data might be of different types. For example, camera pictures can be processed with image recognition techniques to identify a particular vehicle by its license plate, shape, color, etc. Or, radars could monitor the speed of moving objects which could indicate an object on the run (e.g., driving considerably above a legal speed limit). There are technical constraints for processing all this data, for example, storage, transmission, and computation capabilities of the sensors and other systems. Processing all this data could become intractable given the critical timing (narrow time window).

### Summary

A method and system is provided to improve tracing and retrieving of an object movable in a geographical area by making computation and memory consumption more efficient.

The present invention exploits cartographical data (among other data) to reduce the search space in the geographical area. An object which was observed at a particular location is traced to locations of the area it can possibly have moved (or have not moved) from the point in time of the observation (event). This tracing method also allows selecting the relevant sensors within the tracing radius, and to analyze the sensor-data of these selected sensors in regards to attributes of the object. Moreover, the approach considerably improves the memory and search (computation) requirements by pre-processing the data structure which stores the representation of the geographical area. This is, for example, achieved by removing non-relevant data and combining relevant data according to specific rules. Optionally, an index can be pre-calculated for faster tracing and sensor selection.

A computer implemented method for selecting at least one sensor from a plurality of sensors, wherein the at least one sensor is adapted to record sensor-data that is related to a geographical area. The sensor-data comprises information about objects movable between locations of that geographical area, and wherein a data structure with a pre-processed graph represents the geographical area. The pre-processed graph has elements including nodes and edges, wherein nodes represent the locations of the geographical area, wherein edges represent transition times for the objects if moving between the locations. The pre-processed graph has a simplified number of nodes according to rules applied to the elements. The computer implemented method includes: receiving an event indicator in relation to a particular location; identifying a particular node that represents that particular location; identifying further nodes for which accumulated transition times from the particular node have values in a predefined relation to a time interval from the event; and selecting at least one sensor from the plurality of sensors that is related to the locations represented by the identified nodes. The computer implemented method may advantageously allow that only relevant sensor-data has to be analyzed, because sensors are selected based on the locations a particular object can have moved to.

In a further embodiment, the computer implemented method further includes: displaying a visualization of the geographical area, wherein the geographical area is divided into an exclusion and inclusion area, and wherein the inclusion area is defined based on the identified nodes. This aspect of the invention allows a user to visually identify areas the object can have or cannot have moved to.

In an alternative embodiment, the computer implemented method further includes: displaying a visualization of probability of the particular object to move to the locations, and wherein the probability is dependent on values assigned to the particular object. This aspect of the invention allows a user to visually identify areas on a display where the object might have moved according to certain probability values.

Embodiments of the invention can be implemented as a computer program product and a computer system. The computer system can run the computer program product to execute the method.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows an overview including a geographical area, a computer system and processing in the computer system;

FIGs. 2A, 2B, 2C illustrate pre-processing by showing graphs, simplified, reduced versions of the graphs, and the elements that have been removed from the graphs;

FIG. 3 shows a time diagram in combination with a symbolic reference to FIG. 1 to depict the timing of data processing steps;

FIG. 4 illustrates examples for pre-processing graphs stored in a data structure;

FIG. 5 shows exemplary camera frames for an observed event in the real world, a corresponding data structure (with graphs), and corresponding displays;

FIG. 6 shows frames from different cameras along a time bar and corresponding resource requirements for sensor-data processing;

FIG. 7 is an exemplary flow chart according to one embodiment of the computer implemented method of the invention; and

FIG. 8 is a table to illustrate memory and computation requirements for graphs corresponding to different types of geographical areas.

The figures are non-scaled drawings. The sizes of pictograms, such as geographical areas and system components, are only symbolically and should not be mistaken to be aligned with each other.

### Detailed Description

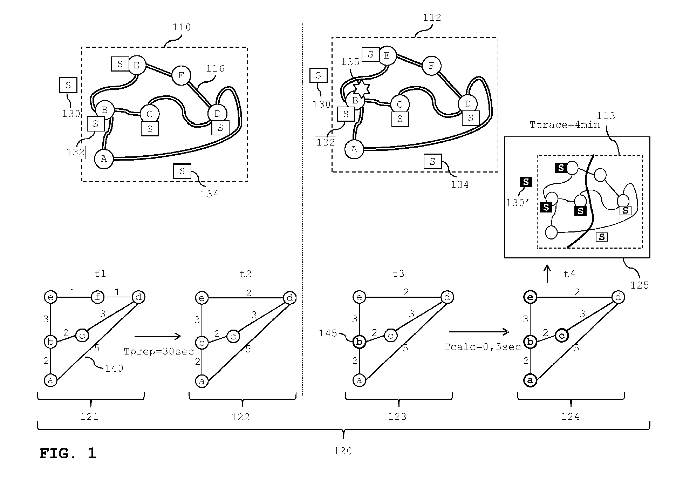

FIG. 1 shows an overview including a geographical area 110, 112 and a computer system 120 as well as processing actions in the computer system 120. Computer system 120 includes a data structure and display 125. The data structure is illustrated at different time points t1, t2, t3, t4 as data structure 121, 122, 123, 124, respectively. Display 125 shows representation 113 of geographical area 110, 112 for a trace interval of 4 minutes.

Geographical area 110 can be, for example, a city with roads 116 (in FIG. 1 illustrated by double-lines) and other urban facilities. The roads form a network that may connect locations A, B, C, D, E, F of the geographical area. The figure depicts the locations by circle symbols and the description uses uppercase letters. A location can be, for example, a bus stop, an intersection, a mountain, a police station, or a railway station. Technically, a location can be specified, for example, by longitude and latitude coordinates.

Geographical area 110 may be populated. People may walk around, drive cars or other vehicles, and ride bicycles. With all these objects in the area, the road traffic can be busy. Therefore, security surveillance might be in place and geographical area 110 might be monitored by different kinds of sensors. For the following explanation, only a particular object will be described. However, the invention could also be applied for tracing/finding and retrieving multiple objects. Moreover, for illustration purposes cameras will be used as sensors.

In FIG. 1, sensors are depicted with a square symbol and the letter S. The placement of the sensors can be within geographical area 110 or outside. For example, sensor 130 could be located outside the area, for example, in a satellite or on top of a high building next to the geographical area. Within the area, sensor 132 can be positioned at a location of the area. The figure gives an example for location B. Sensor 134 might also be positioned somewhere else in the area.

Looking at the observation coverage of sensors, a sensor might monitor a specific location, parts of the area, or the area as a whole. The monitoring direction of a sensor might be directed (e.g., field of view of a camera) or undirected (e.g., vibrations monitored by a seismometer). Sensor 130 might be located in a satellite to monitor geographical area 110 as a whole. Sensor 132, however, might only cover the surroundings of location B, whereas sensor 134 could monitor a part of the area between locations A and D.

In the following description of FIG. 1, different time points t1, t2, t3, t4 are taken into consideration. The different time points are associated with particular conditions of the data structure, which might correlate to the real world. To illustrate the timing, the explanation below follows the time points.

At time point t1, data structure 121 is a representation of geographical area 110. Geographical area 110 is mapped to a graph with nodes a, b, c, d, e, f (lowercase letters) and edges. Nodes a, b, c, d, e, f represent locations A, B, C, D, E, F, respectively. Edges are associated with transition times. The graph can be of any kind as known in the art, such as a directed/undirected graph, a weighted/unweight graph, or combinations of these. Nodes and edges can be associated with multiple attributes each. Examples for attributes are depicted later.

A transition time provides information about the time an object requires to move between two locations. For example, edge 140 of node a and node d has the transition time five (5). The unit of the transition time is not specified for simplicity; it can be, for example, minutes, seconds, or hours. A transition time might have measurement units other than 'time'. For example, a transition time could be associated with the measurement unit 'money' or could be associated with energy consumption. Transition times can also be accumulated for multiple edges which have a common path. The description indicates path by the lowercase letters of the nodes and hyphens. For example, the transition time for movement between location A to location D via location B and C can be accumulated by considering the edges on the path with nodes a-b-c-d to the overall value 2 + 2 + 3 = 7.

The transition time may be derived from various attributes which influence the overall transition time. This value may consider attributes from nodes and edges on the path e-f-d. Examples of attributes for nodes are:
- specific location, e.g., 'location=28 River Street';
- intersections, e.g., 'intersection=yes';
- barriers, e.g., 'barrier=lowBridge';
- vehicles and pedestrians on the street, e.g., 'pedestriansCrossing=yes'.
Examples of attributes for edges (or paths) are:
- type of street, e.g., 'street=residential';
- speed limit, e.g., 'speedLimit=10km/h';
- traffic direction, e.g., 'directed=oneWay';
- number of traffic lanes, e.g., 'Lanes=6';
- an identification of the nodes that are connected, e.g., 'listOfNodes=e,f,d'.

The attributes have different implications, for example, the edge attribute 'Lanes=6' indicates six traffic lanes and, therefore, a lot of cars may pass along this road. Monitoring such a six-lane road might require more sensor resources than, for example, a two-lane-road. Also, the attribute 'directed=oneWay' can have the implication that the transition time depends on the traffic direction. For example, the transition time from node a to node d has the value 5, however, the transition time vice versa from node d to a via the same edge is considered indefinite, since there is no way in this direction.

The information for transition times may be derived from topographical maps or other data sources. Moreover, additional information about sensors may be available and assigned as attributes to the nodes and edges. Examples for information about sensors are:
- Position/ monitoring direction
- Detection capabilities, for example, the detection of weather conditions such as rain, fog, snow, or ice, can affect other attributes that are related to transition times between locations. For example, the weather condition 'rain' might reduce the attribute 'maximum speed' by 20 %, whereas 'snow' could reduce it by 40 %. Technical data of the type of sensor, for example, internal parameters (e.g., a camera sensor has internal parameters such as focal length, principal point, pixel size, horizontal and vertical field of view, movement focus)
- Setup data of the sensor, for example, external parameters (e.g., coordinate positions in space (latitude, longitude, height above the ground))
- calibration data (e.g., transformation parameters to map pixel coordinates on real world coordinates)
- Monitoring range (e.g., the distance to objects that the sensor can detect)
- area covered (e.g., identification of locations)
Also, additional information about, for example, the location and equipment of police cars and ambulances might be available.

At the time geographical area 110 is mapped to data structure 121, some information might not be available. In this case, a placeholder (e.g., a variable) can be associated to an edge or a node. Examples for such information might be weather conditions (e.g., rain, fog), flooding, persons using the streets (e.g., during festivals, demonstrations, or riots), construction sites, and road blocks. This information can have various consequences which are not known at the time geographical area 110 is mapped onto data structure 121, for example, flooding or road blocks might set the transition time to indefinite and, therefore, basically make an edge obsolete.

Data structure 122 at time point t2 is slightly different compared to data structure 121 at time point t1. In comparison to the graph of data structure 121, the graph of data structure 122 has a smaller number of edges and nodes. The reduction is achieved by a pre-processing of attributes by computer system 120 or any other system. For example, to travel from location E to location D, the transition times might be accumulated to 1 + 1 = 2 without losing information. This is possible when the attributes can be consolidated. An example where attributes might not be able to be consolidated could be the attribute 'directed=oneWay' at the edge of node e to node f (directed edge). This prevents the removal of node f, since the edge of node f to node d is undirected. Therefore, the creation of a new edge from node e to node d is not possible. As a result of the pre-processing, the pre-processed graph requires less storage and memory resources and can be more efficiently processed by a computer running graph algorithms. Further, a computer system requires less time for calculating paths of the graph.

Pre-processing the graph can be done with or without information for the placeholders. For example, a pre-processed graph can be generated every day when information for this particular day is available. The sensor selection during the tracing of an object might then use the daily generated pre-processed graph in data structure 122.

Pre-processing is implemented by rules which can combine edges and, thus, remove nodes. In the process, new edges are defined. Different attributes are combined in different ways. Now looking at the pre-processing of data structure 121 to obtain data structure 122 an example can be:

```
function(
         edge_1{nodes="e,f", distance=1km, speedLimit=60km/h, directed=twoWay},
         node_f{location=28 River Street, camera=no},
         edge_2{nodes="f,d", distance=1.5km, speedLimit=90km/h, directed=twoWay})
wherein an example rule is (pseudo code):
         if speedLimit edge_1 and edge_2 not equal
         then calculate effectiveMaxSpeed as
            (edge_1(distance*speedLimit)+edge_2(distance*speedLimit))
            divided by
            (edge_1(distance)+ edge_2(distance));
            add effectiveMaxSpeed to the list of attributes of edge_new;
         else speed limit of edge_new is speedLimit is speedlimit of edge_1.
with a result of:
         edge_new{nodes="e,f,d", distance=2.5km, speedLimit=60:90km/h, directed=twoWay,
         effectiveMaxSpeed=78km/h}
```

As mentioned before, not all edges/nodes are combinable. Therefore, a rule may not be applicable and just give the output that it is unable to combine.

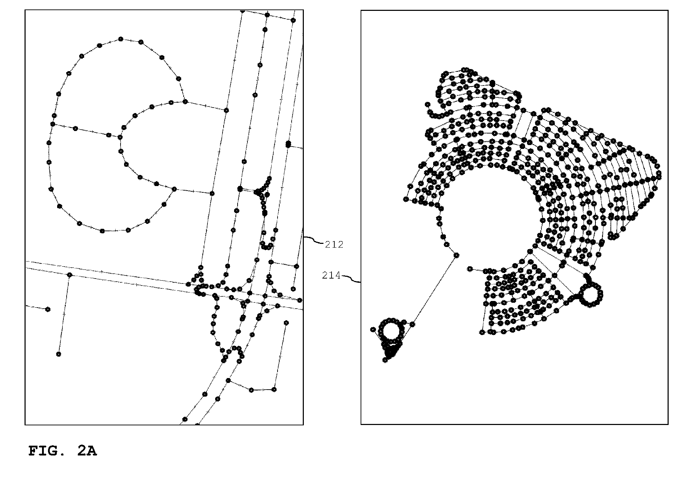

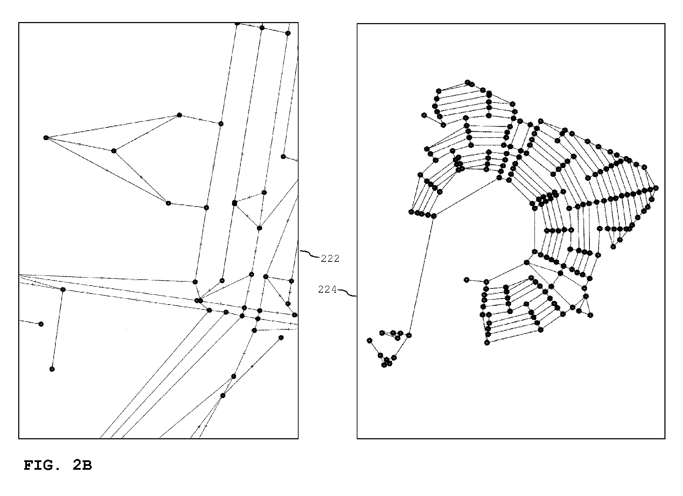

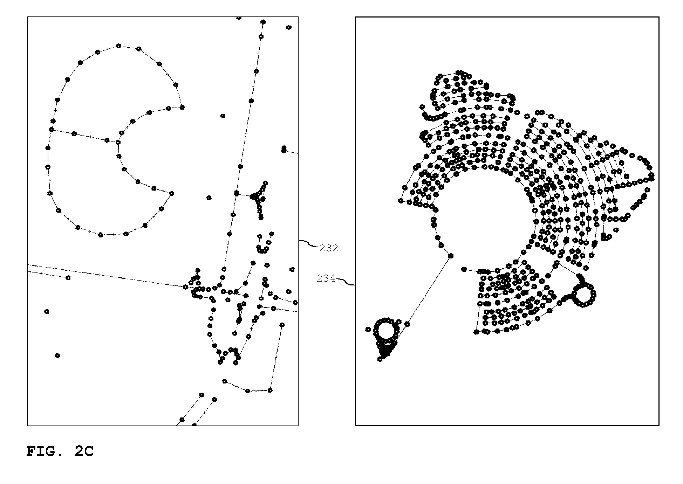

FIGs. 2A, 2B, 2C illustrate pre-processing by showing original graphs 212, 214 (FIG. 2A), reduced versions of the graphs 222, 224 (FIG. 2B), and the elements 232, 234 (FIG. 2C) that have been removed from the graphs. Typically, pre-processing reduces the number of nodes and edges of the graph in data structure 121 (cf. FIG. 1) significantly. The graphs in FIG. 2A show nodes and edges as they are extracted from, for example, cartographical material. Also, additional information about attributes for the nodes and edges might be added to these graphs and placeholders could be introduced. FIG. 2B shows the pre-processed graphs. These have substantially less nodes and edges. The nodes and edges which have been removed during pre-processing are depicted in FIG. 2C. Pre-processing essentially retained all relevant information for selecting sensors.

Having explained the left side of the FIG. 1, supported by FIGs. 2A, 2B, 2C the description now continues with the right side of FIG. 1. The dotted line in FIG. 1 indicates the separation into the above explained pre-processing and the processing.

Geographical area 112 is essentially identical to geographical area 110. Additionally, incident 135 at location B is illustrated by a star symbol. This incident at time point t3 could be a car accident, for example, a hit-and-run driver might have injured a person near location B. Incident 135 might have been observed by video camera 132 which is monitoring the surroundings of location B, or it might also have been recognized by sensor 130 which monitors the area as a whole. The hit-and-run driver was driving, for example, a red colored truck with the license plate "TRUCK 08-15".

Area 112 may be monitored by many sensors which provide a large amount of sensor-data which has to be analyzed in regards to the specific information about the object. However, processing all data at once might not be applicable. The analyses of all data might require too much time so that the object might have already moved on to another location at the time of identification. Therefore, only the sensors at those locations to which the object might have moved within a given time interval should be selected for monitoring in regards to the object. Sensors at locations the object cannot have been moved to, can be ignored.

In order to select the sensors to which the object might have moved within an overall transition time, the pre-processed graph of data structure 122 can be used. At time point t3 incident 135 can be mapped to location B which is represented by node b 145 in data structure 123. Given the above mentioned tracing time of, for example, 4 minutes, the pre-processed graph can be searched for nodes which can be reached within this time interval. In view of geographical area 112, the locations can be identified for which the object might have or will move within the time of 4 minutes. The calculation time for identifying the respective nodes of the graph in data structure 123 is significantly shorter than the time for tracing. In the example of FIG. 1, the calculation time Tcalc is 0,5 seconds whereas the tracing time Ttrace is 4 minutes. There are cases with a time gap between reporting incident 135 and processing the graph. This time gap can be due to an inherent delay in transmitting the information about the object, for example, if the information is transmitted by telephone calls. If the time gap is, for example, 1 minute there is still enough time to identify the locations where the object might have moved within 4 minutes.

More in general, the accumulated transition times (ATT) from the particular node b 145 have values in a predefined relation to a time interval Ttrace. In the example, the predefined relations is the relation that the ATT are shorter than Ttrace (ATT < Ttrace, i.e., reaching nodes/locations within Ttrace). The predefined relation can also be reversed to identify the nodes for that the ATT are larger than Ttrace. In that case, the locations would be identified that the object does not reach within Ttrace.

At time point t4, 0,5 seconds have passed for the calculation of all nodes within the overall transition time of 4 minutes (assuming that the values associated with the edges have minutes as unit). Nodes a, c, and e are identified. The nodes represent locations A, C, and E in geographical area 110, 112 to which an object can move within this given time. The identified nodes and/or corresponding locations can be illustrated on display 125. This display can visualize geographical area 113, wherein the area can be divided into an exclusion area and an inclusion area. On display 125, the inclusion area is illustrated left of the bold curved line, the exclusion area is right of this line. Exclusion area means, that the object cannot have moved to this area given the time interval. The visualization on display 125 also shows the selected sensors; the sensors are depicted as filled black squares with a white letter S - corresponding to the illustration of sensors in geographical area 110, 112. For example, sensor 130' is such a selected sensor. The sensor selection is based on the identified locations and the respective area. Only the sensor-data of the selected sensors has to be monitored for the object for at least the time interval of 4 minutes after incident 135 happened.

The process of identifying nodes/locations and selecting sensors can be repeated with different time intervals (Ttrace), because the calculation of the nodes in the graph of data structure 121, 122, 123 is resource efficient. As mentioned before, the data structure has also been effectively reduced in storage and memory size. The selection/identification process can basically be done in very small time interval steps, which might appear as real-time on display 125 to a user.

It is also possible to deselect nodes after a certain time interval. For example, after one minute it might be safe to assume that the object has moved out of range from location B of incident 135. The assumption could be based on the information, for instance, that the highway is a one way street and there is no path back to location B without passing a police control. That means that sensor 132 (which will be selected in the selection process) can safely be deselected.

The attributes of nodes and edges might also have placeholders for information about the object. In the example above, the information about the object being a truck might adjust the speed limit to a lower limit or might even exclude streets where a truck cannot move through. This means, a part of the graph can be specialized for the specific object type.

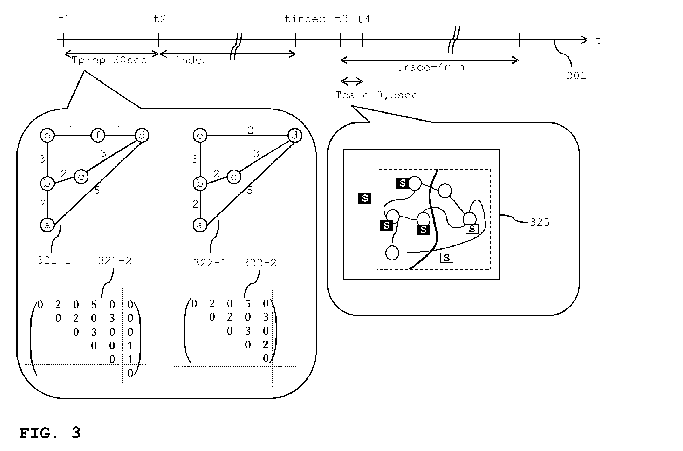

FIG. 3 shows a time diagram in combination with a symbolic reference to FIG. 1 to illustrate the timing of data processing steps. Time bar 301 shows the different time points t1, t2, t3, t4. Below time bar 301, the time needed for pre-processing the graph is indicated as Tprep = 30sec, which means, in this example, pre-processing of graph 321-1 to graph 322-1 requires 30 seconds. Reducing a complex graph may take significantly longer than indicated in this example, for instance, several minutes to several hours. The pre-processed graph 322-1 can be re-pre-processed whenever new information is available, for example, when information about construction sites, weather, etc. becomes available. Re-pre-processing can be performed periodically, for example, every day, every hour, or every minute. Also, incremental updates of pre-processed graph 322-1 are possible. For example, when new information is available, pre-processing only the corresponding parts of graph 321-1 can be performed and the changes propagated to graph 322-1.

The ellipsis on bar 301 between time points t2 and t3 indicates that pre-processing of the data structure and processing on the data structure (i.e., selecting sensors) can be decoupled and a lot of time can have passed. This also means, that pre-processing the data structure is not time critical, since at the time of pre-processing there should be no need for tracing an object.

Looking now at data structure 321-2 representing graph 321-1 and data structure 322-2 representing graph 322-1. As shown in the example, the graph can be stored as an adjacency matrix in the data structure; any other data structure which is appropriate for storing graphs may be used as well. In an adjacency matrix, the intersections at the rows and columns represent the transition between adjacent nodes. For example, the intersection of row 1 and column 2 is associated with the transition from node a to b. The graph in the figure is an undirected graph. In other words, the transition time from node a to node b is the same as from node b to node a. Therefore, one half of the adjacency matrix can be disregarded and less storage is required. Data structure 321-2 is a 6x6 adjacency matrix. It shows the transition time between adjacent nodes. A zero (0) in the adjacency matrix means that there is no edge between the respective nodes.

As already illustrated in connection with FIG. 1, pre-processing removes node f of graph 322-1, so that the corresponding data structure 322-2 is a smaller 5x5 adjacency matrix. The corresponding edges are consolidated to a new edge with the transition time two (2). In this example, the last column and last row was deleted (for node f). Moreover, the transition time in data structure 322-2 for the edge between node e and node d was updated from zero (0) to two (2) (shown in bold in data structure 321-2, 322-2). For a complex graph, the gain (i.e., the saving) in memory and storage can be significant. Moreover, the pre-processed graph requires less processing time for the graph algorithms when tracing an object and time is relevant. Such graph algorithms can be, for example, Dijkstra, A* (A-star), Bellman-Ford, Johnson or any other appropriate graph algorithm and combinations thereof.

Optionally, the pre-processed graph can be used for summing up transition times between combinations of nodes (along paths) into an index. Such an index could be a paired index with pairs of nodes. For example, for the path between node pair (a,c) (nodes a and c), the index sums up the transition time to 2 + 2 = 4. In other words, an index of the edges between any two nodes of the graph can be created.

This index can be calculated starting from t2 or later and would be completed for all node pairs at time point tindex. The time needed to provide a complete index is given as time interval Tindex. However, there is no need to have the index completed for all nodes. It is possible to calculate the index in a background process.

Further information can be included to the index. For identifying nodes of the graph (i.e., selecting sensors) an algorithm can be identified based on the index. In other words, the best fitting graph algorithm (such as mentioned above) can be identified based on the index for optimizing the time for sensor selection (Tcalc).

At time point t3, an event (e.g., incident being reported) might trigger the sensor selection process for a trace value of 4 minutes (Ttrace = 4min). In other words, at time point t4, display 325 shows the inclusion area and exclusion area. Further, processing the sensor-data provided by the selected sensors has started. The time for the calculation of the visualization and the selection of sensors is typically much shorter than the time the object requires to move between locations. The calculation time Tcalc depends on the size of the overall graph. In FIG. 3, a calculation time of half a second is shown (Tcalc = 0,5sec) and compared to a tracing time of 4 minutes (Ttrace = 4min).

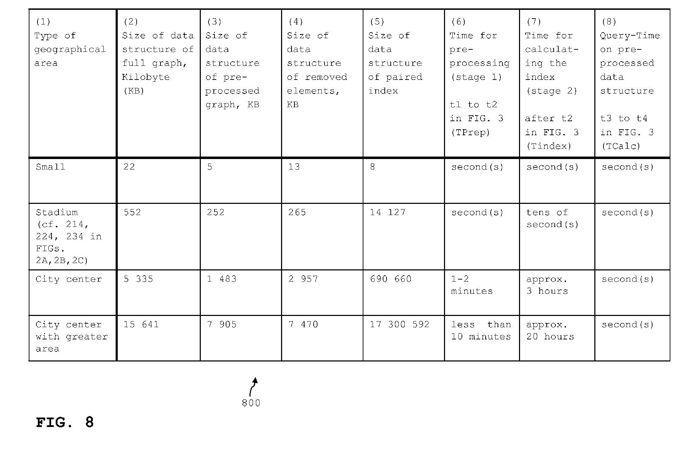

The sensor selection process can optionally use the index. Further examples for Tprep, Tcalc, and Tindex are illustrated in connection with FIG. 8. In the embodiment that uses the index, pre-processing is also referred to as "stage 1", and calculating the index is also referred to as "stage 2".

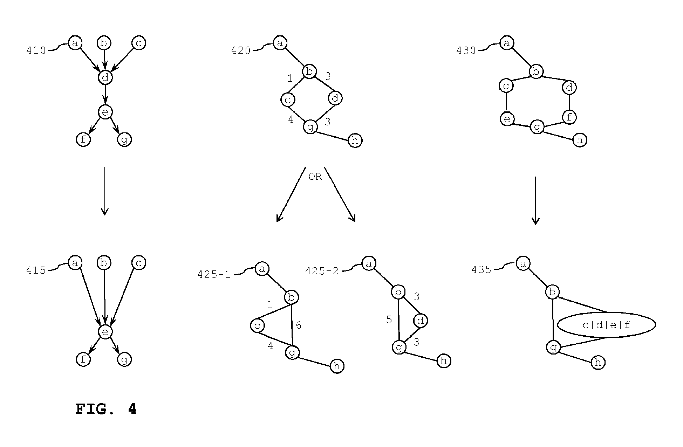

FIG. 4 illustrates examples for pre-processing graphs stored in the data structure. The graphs 410, 420, 430 are pre-processed according to rules applied to elements of the graph. The pre-processed graphs 415, 425-1425-2, 435 have less nodes and edges compared to the original versions.

Graph 410 is a directed graph. Further information about attributes of graph 410 (e.g., a particular node cannot be removed because a sensor is located at the position of the respective location) is not provided in this example. During pre-processing of graph 410, node d and the edge from node d to node e can be removed. Node e, however, cannot be removed, since it has two directed outgoing edges. The pre-processed graph 415 shows the result for this example.

Graph 420 is an undirected graph. Additionally, the transition times of all edges between node b and node g are given. Getting from node a to node h or vice versa is possible on two different paths: path a-b-c-g-h and path a-b-d-g-h. These paths correspond to two (distinct) different routes to move between two locations. This information (i.e., there are two paths/routes from node a to node h) should not be lost when removing nodes and edges. Thus, in this example, there are two possible versions of a pre-processed graph. The decision to use graph 425-1 or graph 425-2 can depend on further attributes.

Pre-processed graph 425-1 shows a version where node d is removed. The transition times on the sub-path from b-d-g are combined to the value '6' and assigned to the new edge from node b to node g. After having removed node d, node c becomes mandatory to preserve the information about two possible routes between the two locations.

Pre-processed graph 425-2 shows the other version where node c is removed. The resulting new transition time (obtained from the original sub-path b-c-g) has the value '5' and is assigned to the new edge from node b to node g. Also here, after removing node c, the remaining node d cannot be removed. This preserves the information about the two possible paths. In both pre-processed graphs 425-1, 425-2, a new edge from node b to node g is introduced. However, the transition times of the two pre-processed graphs 425-1, 425-2 are different, while the relevant information from the original graph 420 is maintained.

Graph 430 is an undirected graph. Getting from node a to node h or vice versa is possible on two different paths: path a-b-c-e-g-h and path a-b-d-f-g-h. Similar to graph 420, in graph 430 these paths correspond to, for example, two (distinct) different routes to move between two locations. However, graph 430 has more intermediary nodes on the paths. Pre-processed graph 435 shows the possible versions for removing nodes and edges while retaining the relevant information about the two possible paths. In the illustration of pre-processed graph 435, the vertical bar "I" in the node on the right indicates logical 'OR' (i.e., 'c|d|e|f' means 'c OR d OR e OR f'), thus, four versions for a pre-processed graph are possible. If, for example, node c and node d are removed and a new edge between node b and node g is introduced, the remaining sub-path b-d-f-g can only be reduced to either b-d-g or b-f-g in order to retain the information about two possible paths.

Comparing pre-processed graphs 425-1, 425-2 and 435, it is notable that they have the same graph structure with only different values for the transition times (assuming pre-processed graph 435 has transition times). This means, that the storage requirement of the data structure for these pre-processed graphs as well as the computational complexity of a graph algorithm are almost identical, although the original graphs 420, 430 are different in storage and computational demands.

Pre-processing can depend on the number of edges and nodes as well as on the number of attributes that are available. For example, two alternative branches between two nodes can remain in the graph (i.e. without removing one of the branches) if the graphs have different attributes (e.g., speeds 10 km/h and 30 km/h). The attributes can take properties of the vehicles into account. In other words, over-simplification by deleting attributes should be avoided.

As described before, particularly in the description of FIGs. 2A, 2B, 2C, removing nodes and edges of a graph can significantly reduce storage requirement for the data structure and shorten computing time (also cf. FIG. 8, processing time).

The description continues to explain processing with the focus on real world scenarios and user interaction.

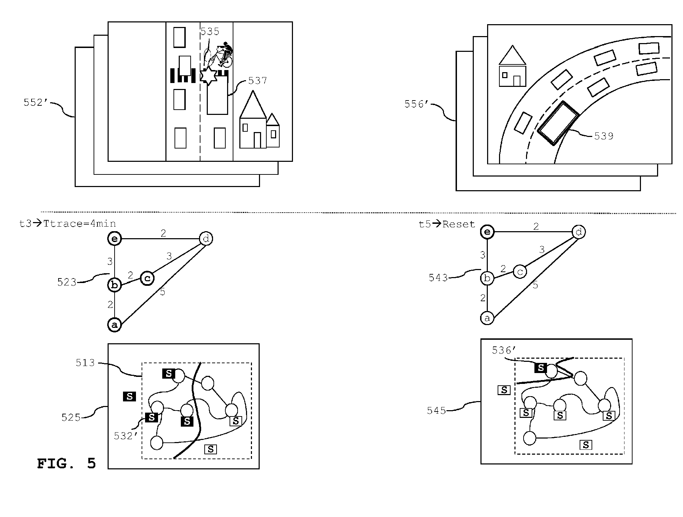

FIG. 5 shows exemplary camera frames 552', 556' for an observed event 535 in the real world, a corresponding data structure (with graph 523, 543), and corresponding display 525, 545.

Camera frames 552' are observed by sensor 532'. The position of sensor 532' is associated with node b of graph 523, 543. The frame in the foreground of camera frames 532' shows a picture of a two-lane street, vehicles on the street, a crosswalk, houses, and a bicyclist. The vehicles on the street are depicted as rectangles. Rectangle/object 537 is larger than the other rectangles indicating that the corresponding vehicle has a unique shape (or size) compared to the other vehicles.

At a time point t3 (cf. Fig. 3) sensor 532' registers incident 535: a truck (object 537) hits the bicyclist at a crosswalk. However, the truck does not stop, and continues driving. Hence, the truck and its driver needs to be found by security authorities. Therefore, the data structure is processed to calculate the respective nodes in graph 523 for a tracing time of 4 minutes (Ttrace = 4min). The corresponding nodes a, b, c, e in graph 523 are shown in bold. Nodes a, b, c, e represent locations in the real world which the truck can reach within the time interval of 4 minutes. Display 525 shows visualization 513 based on the calculations on graph 523. Visualization 513 shows a representation of the geographical area, divided into an inclusion and exclusion area (cf. description for FIG. 1). Moreover, the nodes which are selected for analyzing the respective sensor-data in regards to object 537 are shown on display 525 as black squares with the white letter 'S'. On display 525, a user can easily recognize the potential search area and the relevant sensors. The calculation for the tracing time of 4 minutes is considerably less (than 4 minutes, cf. description of FIG. 3). This allows an efficient sensor-data processing, because considering only the selected sensors allows processing much less overall data. Furthermore, the security authorities can already arrange their activities to that area, for example to dispatch a police car.

At a later time point t5, object 537 is recognized on the camera frames 556' of sensor 536'. Time point t5 might be, for example, two minutes later from time point t3 of incident 535. The frame in the foreground of camera frames 556' shows a two-lane street with multiple vehicles and a house. Object 537 is recognized 539 in the inner lane of the curve. The recognition is illustrated with the bold line 539 around the rectangle. The recognition might have been performed by image recognition methods run on the processor of the camera or any other system. Also, a human operator observing the camera frames 556' of selected sensor 536' might have recognized 539 object 537.

When object 537 is recognized (539), the selection of sensors can be reset. In other words, only node e of graph 523, 543 might be selected, since object 537 was identified at the location (which is monitored by sensor 536') associated with the node. Graph 543 shows node e in bold at time point t5. The corresponding visualization 545 might instantly update the inclusion and exclusion area as well as the indication of selected sensors. A user is instantly informed about the possible location of object 537. On display 545 the inclusion area is in the upper left corner of the representation of the geographical area.

As the location where object 537 was identified, the calculation can start anew. It is also possible that a sighting of object 537 in the exclusion area is received. Because this might not be reliable information, the current tracing shown on display 525, 545 shall not be discarded. Rather a second calculation with a new node representing the reported location can commence and both tracing processes can be illustrated on display 525, 545 (not shown in FIG. 5).

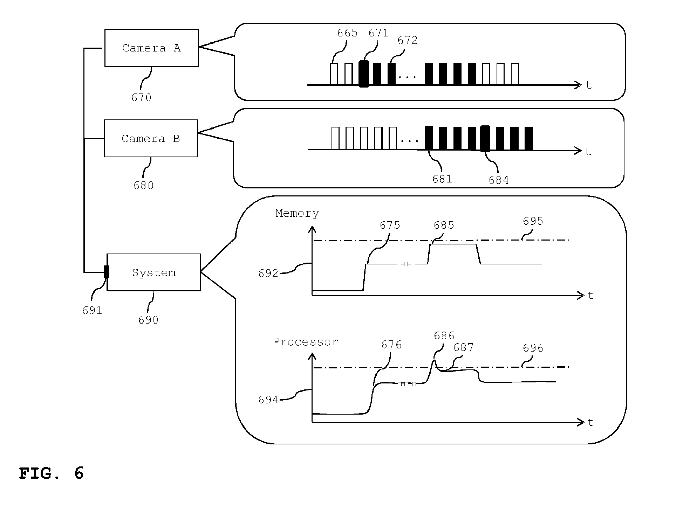

FIG. 6 shows frames from different cameras along a time bar and shows corresponding resource requirements for sensor-data processing. Sensor-data of different cameras are matched to the data about the object. Referring back to the description of FIG. 1 this data is, for example, the color "red" and the license plate "Truck 08-15". To obtain such data from sensors, any state of the art image-processing technique might be used. However, processing the data of all sensors might be prohibitive in terms of resource consumption. Therefore, the image-processing starts with the sensor(s) which is next to the location of the object.

In detail, FIG. 6 shows cameras 670, 680 and system 690. Cameras 670, 680 are connected to system 690 via interface 691. Cameras 670, 680 provide system 690 with video frames. System 690 receives the frames and image-processes them. In the figure, cameras 670, 680 and system 690 are associated with diagrams which are vertically aligned along the time axis (i.e., they also have the same time scale t).

The diagrams associated with cameras 670, 680 show frames of the corresponding camera from monitoring a geographical area. Frames are symbolized with rectangles. Rectangles which have a white filling illustrate frames which system 690 does not process in regards to finding a particular object. Frame 665 is such a frame. However, they might be processed with image processing techniques which require only small resources but can recognize anomalies such as an accident. Rectangles which have a black filling illustrate frames which are processed in regards, for example, color "red" and license plate "Truck 08-15". Frames 672 and 681 are such frames. In the case an event happens, for example, an accident is recognized or a pattern is identified, a frame is illustrated with an inner white rectangle of a solid black rectangle. Frames 671 and 684 are such frames.

System 690 is illustrated with memory diagram 692 and processor diagram 694; the memory consumption and processing load is depicted along the respective vertical y-axis. The storage and processing capabilities of system 690 is usually limited. Thresholds 695 and 696 are indicating the respective limitation of system 690. System 690 could be a basic computer system with extremely small energy requirements in order to run on solar power, and, therefore, might be located close to cameras 670, 680. It could also be any other system.

System 690 is processing all video frames received from cameras 670, 680. As a standard routine it is applying a simple image recognition technique on all frames. Such standard routines can identify accidents but require only small memory and processing resources. In diagrams 692, 694 these resource demands are indicated by the lower base line at the left of the respective time axis. At frame 671 of camera 670, system 690 recognizes an accident. The attributes color "red" and license plate "Truck 08-15" are identified and all frames of camera 670 (that follow) are now matched to this data. The memory consumption 675 and processing load 676 of system 690 increases.

At the time point the accident/event was recognized in frame 671, another system might have started selecting sensors to which the object can travel within given time intervals. Camera 680 might not have been within this time interval for several minutes. For example both cameras are monitoring different directions of the same highway. Therefore, the vehicle could not have been monitored by camera 680 right away (this means, system 690 can be in close proximity to cameras 670, 680).

At a later point in time, system 690 starts processing frames of camera 680, because the vehicle could now have reached the monitoring area (of that camera that is selected). Frame 681 is the first frame which is analyzed for the color "red" and license plate "Truck 08-15". The memory consumption 685 increases to a level just below its threshold. However, the processing load 686 exceeds the threshold of the processor of system 690. This could be because there might be a lot of vehicles with a red color, and the additional license plate matching could be too demanding for the processor. Therefore, system 690 reduces, for example, the frequency it pattern matches the license plate number; the processing load levels 687 below the threshold.

System 690 identifies the vehicle on frame 684 of camera 680. Therefore, camera 670 does not need to be matched to the vehicle data anymore. This means, the memory consumption and processor load decreases in system 690.

In a different scenario, potentially there are two or more sensors that identify vehicles with a particular color and shape. But to further save computation efforts, image processing or other computation intensive activities can be limited to data from sensors that are located in the inclusion zone.

There might be situations in that an incident does not trigger an immediate sensor selection as described above (from hereon called 'online mode'). Thus, between the incident and the sensor-data processing there could be a relatively long time period. For example, an incident is reported to the police only hours or days after in occurred. Therefore, another embodiment (not visualized in a figure) is responsive for such a scenario. Stored sensor-data is analyzed in regards to a particular object. In this example, the timing (as illustrated with Tcalc and Ttrace in FIG. 3) between an incident and sensor-data processing of sensors monitoring a corresponding area might not be critical (i.e., timing for selecting the sensors). However, time could also be an important aspect, because a huge amount of historic data has to be analyzed. For example, the sensor-data for a certain time period (e.g., records of 72 hours after the reported incident) has to be processed to identify the particular object on the historic sensor-data. This analysis might have to be performed under given restricted resources in a certain time period (e.g., the police requires the results quickly ). Therefore, an efficient sensor-data processing has to be ensured. The person skilled in the art can apply the computer implemented method for selecting sensors described afore to this 'offline' scenario on stored (historic) data. More in particular, the person skilled in the art can utilize the data structure to identify relevant nodes and the corresponding sensors. As a consequence, only the respective sensor-data in regards to the particular object will be analyzed.

Other embodiments for selecting sensors based on combinations of the online and offline modes as well as other aspects are possible. For example, selecting sensors can be dependent on the amount of sensor-data recorded and stored over time; the amount of sensor-data provided by sensors at the time of the incident; sightings or identifications of the object in the inclusion or exclusion area; the type of object (e.g., it might be resource demanding to find all cars with the color white); probability values for an object for moving in a specific direction.

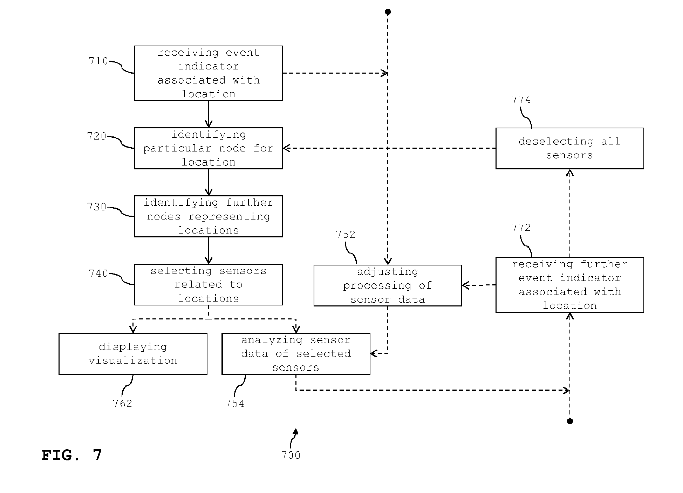

FIG. 7 is an exemplary flow chart of a computer implemented method 700 according to an embodiment of the invention for selecting at least one sensor from a plurality of sensors (cf. 130, 132, 134 in FIG. 1). From the plurality of sensors at least one sensor is adapted to record sensor-data that is related to a geographical area (cf. 110, 112 in FIG. 1). This sensor-data can comprise information about objects (cf. 537 in FIG. 5) that are movable between locations (cf. A, B, C, D, E, F in FIG. 1) of the geographical area (cf. 110, 112 in FIG. 1). Moreover, a data structure (cf. 120, 121, 122, 123 in FIG. 1) with a pre-processed graph represents the geographical area (cf. 110, 112 in FIG. 1) and the pre-processed graph has elements comprising nodes and edges. Nodes (cf. a, b, c, d, e, f in FIG. 1) represent the locations (cf. A, B, C, D, E, F in FIG. 1) of the geographical area (cf. 110, 112 in FIG. 1) and edges represent transition times (cf. 140 in FIG. 1) for the objects (cf. 537 in FIG. 5) if they would move between the locations (cf. A, B, C, D, E, F in FIG.1). The pre-processed graph has also a reduced number of nodes (cf. a, b, c, d, e, f in FIG. 1) according to rules applied to the elements. The above description provided further information about the rules applied to the elements of the graph, particularly with reference to FIGS. 2A-2C, 3, and 4.

In the figure, arrows indicate a sequence of actions. Dashed arrows point to actions that are optional. A black dot at the beginning of an arrow indicates that the trigger for the method step can be received externally. Although the steps in FIG. 7 are illustrated and described in a sequential order, the steps could also be performed in parallel (e.g., in a pipeline processing mode) In other embodiments method steps could also be arranged in a different sequence.

Method 700 is performed by a computer and starts with receiving 710 an event indicator (cf. 135 in FIG. 1) in relation to a particular location (cf. location B in FIG. 1). Upon receiving 710 the event indicator, the computer proceeds with identifying 720 a particular node (cf. 145, b in FIG. 1) that represents the particular location (cf. B in FIG. 1). The computer then identifies 730 further nodes (cf. a, c, e FIG. 1) for which the accumulated transition times (ATT) from the particular node (cf. b in FIG. 1) have values in a predefined relation to a time interval (e.g., ATT < Ttrace, in FIG. 1) from the event (cf. 135 in FIG. 1). The method continues with selecting 740 at least one sensor (cf. 130' in FIG. 1) from the plurality of sensors (cf. 130, 132, 134 in FIG. 1) that is related to the locations represented by the identified nodes (cf. a, b, c, e in FIG. 1).

In a further embodiment, a particular object which is in relation to the particular location (cf. B in FIG. 1) is being associated with information. Such information could be, for example, the color of the object or a unique shape of the object. The method 700 further comprises adjusting 752 the processing 754 of the sensor-data recorded by the selected sensors according to the said information.

In another embodiment, the method 700 further comprises displaying 762 a visualization (cf. 113 in FIG. 1) of the geographical area (cf. 110, 112), wherein the geographical area is divided into an exclusion and inclusion area, and wherein the inclusion area is defined based on the identified nodes. Optionally, the method comprises displaying 752 a visualization for the probability of the particular object to move to the locations (e.g. object arriving 537 at location E and also to other locations within the inclusion zone). The probability is dependent on values assigned to the particular object (e.g., a truck moving at a certain maximum speed even when escaping).

In another embodiment, the method 700 further comprises to receive 772 a further event indicator (cf. 539 in FIG. 5) in relation to the particular object (cf. 537 in FIG. 5), wherein the particular object (cf. 537 in FIG. 5 ) is related to a new particular location in the geographical area. The method 700 then proceeds with deselecting 774 all selected sensors and repeating the method steps 720, 730, and 740. In other words, the selection of sensors is started anew because the particular object might have been sighted or recognized at another location, or might have been triggered by another external input (e.g., manual user input received through a user interface).

The predefined relation to the further time interval Ttrace' remains the same (e.g., ATT < Ttrace'), and the further time interval Ttrace' from the event can be longer than the previously used time interval Ttrace.

FIG. 8 shows table 800 to illustrate memory and computation requirements for graphs corresponding to different types of geographical areas. In the following example, data has been coded by data structure in XML format. The sizes of the data structures are given in Kilobyte (KB).

Column (1) shows different types of geographical areas, such as a small area (e.g., a street crossing in a roundabout arrangement), a baseball stadium, a center of a megacity, and the city center with the greater area of a megacity. Column (2) shows the typical sizes of the data structure of a corresponding original graph prior to pre-processing (cf. FIG. 1/121, FIG. 3, prior to t1). For the stadium, this corresponds to graph 214 in FIG. 2A. Column (3) shows the size of the corresponding data structure after a computer pre-processing the respective original graph (after FIG. 3/t2). For the stadium, this corresponds to graph 224 in FIG. 2B. Column (4) shows the size of the corresponding removed data. For example, the data structure for the stadium in row three is reduced from 552 KB (prior to FIG. 3/t1) to 252KB (after FIG. 3/t2). For the stadium, this corresponds to removed elements 234 in FIG. 2C. Column (5) shows the size of the optional paired index. Column (6) shows the time for pre-processing Tprep between FIG. 3/t1 and FIG. 3/t2 (i.e., stage 1). Column (7) shows the time for calculating the index, Tindex, if the index would be calculated for substantially all node pairs (i.e., stage 2). Column (8) shows the time for selecting sensors, in FIG. 3 also referred to Tcalc.

The time to calculate the index (stage 2) increases non-linearly to the size of the pre-processed graph (col. (3)); and calculating can consume many hours (col. (7)). But despite such circumstances, there is a benefit in having a short time for selecting sensors (TCalc, col. (8)) in the order of seconds (or even less than a second). As mentioned, the index can be calculated as a background process without the need to reach completeness of the index. The efforts to compute the index (and pre-processing itself) are turn into minimum efforts for selecting the sensors, not only in terms of computation but also in terms of time. In view of the short time that is available for taking actions (e.g., dispatching the police), the time interval TCalc appears to the users as waiting time that is almost negligible.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A computer implemented method (700) for selecting at least one sensor from a plurality of sensors (130,132,134) for monitoring a geographical area (110,112), wherein a data structure (120,121,122,123) with a pre-processed graph represents the geographical area (110,112), the pre-processed graph having nodes (a,b,c,d,e,f) representing locations (A,B,C,D,E,F) and having edges representing transition times (140) for objects (537) if moving between the locations (A,B,C,D,E,F), and wherein the pre-processed graph is a simplified version of an original graph, the method comprising:
receiving an event (135) indicator in relation to a particular location (B);
identifying (720) a particular node (145,b) that represents the particular location (B);
identifying (730) further nodes (a,c,e) for which accumulated transition times from the particular node (b) have values in a predefined relation to a time interval (Ttrace) from the event (135); and
selecting (704) at least one sensor (130') from the plurality of sensors (130,132,134) that is related to the locations represented by the identified nodes (a,b,c,e).

2. The method of claim 1, wherein at least one node represents a sensor location.

3. The method of anyone of the claims 1 to 2, further comprising associating at least one element of the graph with a placeholder for first information that is related to the geographical area, wherein the first information adjusts the transition time between two locations.

4. The method of claim 3, further comprising receiving the first information from the sensors.

5. The method of claim 3, further comprising receiving the first information from external sources.

6. The method of anyone of the claims 1 to 5, wherein a particular object in relation to the particular location (B) is being associated with second information; the method further comprising adjusting the processing of sensor-data recorded by the selected sensors according to that second information.

7. The method of anyone of the claims 1 to 6, further comprising to repeat the step of identifying further nodes using the same predefined relation to a further time interval from the event that is longer than the previously used time interval.

8. The method of anyone of the claims 1 to 7, upon receiving a further event indicator (539) in relation to the particular object (537), wherein the particular object (537) is related to a new particular location in the geographical area, the method further comprising:
deselecting all selected sensors; and repeating the following steps:
identifying a new particular node (543/e) that represents the new particular location;
identifying new further nodes for which the accumulated transition times from the new particular node have values in a predefined relation to a new time interval from the further event; and
selecting at least one new sensor (536') from the plurality of sensors that is related to the locations represented by the new identified nodes.

9. The method of anyone of the claims 1 to 8, further comprising: displaying a visualization (113) of the geographical area (110,112), wherein the geographical area is divided into an exclusion and inclusion area, and wherein the inclusion area is defined based on the identified nodes.

10. The method of anyone of the claims 1 to 9, further comprising: displaying a visualization of probability of the particular object to move to the locations, and wherein the probability is dependent on values assigned to the particular object.

11. The method of anyone of the claims 1 to 10, wherein a part of the graph is specialized for an object type.

12. The method of anyone of the claims 1 to 11, wherein data to identify the particular location is received from a user interface.

13. A computer program product that when loaded into a memory of a computing system and executed by at least one processor of the computing device executes the steps of the computer implemented method according to anyone of the claims 1 to 12.

14. A computer system for selecting at least one sensor from a plurality of sensors (130,132,134), wherein the at least one sensor is adapted to record sensor-data that is related to a geographical area (110,112), wherein the sensor-data comprises information about objects (537) movable between locations (A,B,C,D,E,F) of that geographical area (110,112), wherein a data structure (120,121,122,123) with a pre-processed graph represents the geographical area (110,112), the pre-processed graph having elements comprising nodes and edges, wherein nodes (a,b,c,d,e,f) represent the locations (A,B,C,D,E,F) of the geographical area (110,112), wherein edges represent transition times (140) for the objects (537) if moving between the locations (A,B,C,D,E,F), and wherein the pre-processed graph has a simplified number of nodes (a,b,c,d,e,f) according to rules applied to the elements, comprising:
a receiver component adapted to receive (710) an event (135) indicator in relation to a particular location (B);
a first identifier component configured to identify (720) a particular node (145,b) that represents that particular location (B);
a second identifier component configured to identify (730) further nodes (a,c,e) for which accumulated transition times from the particular node (b) have values in a predefined relation to a time interval (Ttrace) from the event (135); and
a selector component configured to select (740) at least one sensor (130') from the plurality of sensors (130,132,134) that is related to the locations represented by the identified nodes (a,b,c,e).

15. The computer system of claim 14, further comprising: a display component adapted to display (756) a visualization (113) of the geographical area (110,112), wherein the geographical area is divided into an exclusion and inclusion area, and wherein the inclusion area is defined based on the identified nodes.
